# EUROPEAN PATENT APPLICATION

(11) **EP 2 645 192 A1**
(43) Date of publication of application: **02.10.2013**
(21) Application number: 12162360.7
(22) Date of filing: 30.03.2012
(51) Int. Cl.: G05B 19/418

(54) **Monitoring the progress of a scheduled activity in an industrial process**

(71) Applicant: ABB Research Ltd., 8050 Zürich (CH)
(72) Inventor: Lundeholm, Filip, 415 01 Göteborg (SE); Mikkelsen, Christine, 725 91 Västerås (SE); Dong, Diamond, 722 10 Västerås (SE); Jakobsson, David, se-931 46 Skellefteå (SE)
(74) Representative: Savela, Reino Aleksi

(57) **Abstract**

The present invention relates to a method, process monitoring computer and a computer program product for monitoring the progress of a scheduled activity (A₆) in an industrial process, the activity being performed at least partly via a machine and presented for an operator via the process monitoring computer, the process monitoring computer comprising a display and a control unit. The control unit is configured to present the activity (A₆) according to schedule, obtain measurements made by the machine, determine the progress of the activity based on the machine measurements, determine the difference between the progress and the schedule, and display the difference on the presentation of the scheduled activity.

## Description

### FIELD OF THE INVENTION

The present invention generally relates to process monitoring computers in process control systems. More particularly the present invention relates to a method, process monitoring computer and a computer program product for monitoring the progress of a scheduled activity in an industrial process.

### BACKGROUND

Some industrial processes, such as mining processes, are suitable for being monitored using Gantt charts. In this type of process there are typically different production points, i.e. areas where activities in the process are taking place. Furthermore the activity performed at a production point is often performed by a machine. In a Gantt chart there are a number of horizontal rows and in these rows a number of consecutive items are shown. The rows can in a mining application be associated with a production point, in which a number of consecutive activities in the process at the production point are shown. They may also be associated with machines. The horizontal dimension of the chart is furthermore the time. The items may in this type of application be activities in the process.

These charts may be used for the planning of the process. It is also of interest to combine this with the monitoring of the progress of the process, i.e. to monitor how the activities actually progress.

There is however a problem in that when the progress of the actual and planned activity are presented together, the chart may get cluttered, i.e. there will be a lot of information that is hard to grasp for an operator.

This may lead to an operator not being able to understand that an activity does not proceed as planned, and perhaps even more seriously, will not be able to understand the consequences of this on other activities of the process. Furthermore a display showing a lot of information will tend to consume more energy than one that shows less details.

The present invention addresses one or more of the above motioned problems.

### SUMMARY OF THE INVENTION

The present invention addresses this situation. The invention is therefore directed towards solving the problem of improving user friendliness in relation to monitoring of the progress of a scheduled activity in an industrial process.

This object is according to a first aspect of the invention solved through a method of monitoring the progress of a scheduled activity in an industrial process, the activity being performed at least partly via a machine and presented for an operator on a display of a process monitoring computer, the method comprising the steps of:
presenting the activity (A6) according to schedule,
obtaining measurements made by the machine,
determining the progress of the activity based on the machine measurements,
determining the difference between the progress and the schedule, and
displaying the difference on the presentation of the scheduled activity.

This object is according to a second aspect of the invention solved through a process monitoring computer for monitoring the progress of a scheduled activity in an industrial process, the activity being performed at least partly via a machine and presented for an operator via the process monitoring computer, the process monitoring computer comprising a control unit configured to
- present the activity according to schedule,
- obtain measurements made by the machine,
- determine the progress of the activity based on the machine measurements,
- determine the difference between the progress and the schedule, and
- display the difference on the presentation of the scheduled activity.

This object is according to a third aspect of the invention solved through a computer program product program product for monitoring the progress of a scheduled activity in an industrial process, the activity being performed at least partly via a machine and presented for an operator via a process monitoring computer, the computer program product being provided on a data carrier comprising computer program code configured to cause the process monitoring computer to, when said computer program code is loaded into the process monitoring computer,
- present the activity according to schedule,
- obtain measurements made by the machine,
- determine the progress of the activity based on the machine measurements,
- determine the difference between the progress and the schedule, and
- display the difference on the presentation of the scheduled activity on the display.

The present invention has a number of advantages. It enables the possibility of a good overview of the progress of activities without the view being cluttered with additional objects, thereby avoiding confusion. Furthermore, the displaying is economical and therefore energy is also saved. Thanks to the power of human vision the solution also scales extremely well and facilitates a deeper exploration of underlying trends of progress. This type of presentation also reduces cognitive strain when working with large charts, leading to increased productivity.

### BRIEF DESCRIPTION OF THE DRAWINGS

The present invention will in the following be described with reference being made to the accompanying drawings, where
Fig. 1 schematically shows a process control system 10 for an industrial process comprising a number of machines at different process points,
Fig. 2 schematically shows a process monitoring computer of the present invention,
Fig. 3 schematically shows a first version of a Gantt chart being presented on a display of the process monitoring computer,
Fig. 4 schematically shows a second version of a Gantt chart being presented on the display of the process monitoring computer,
Fig. 5 schematically shows a flow chart of a number of method steps being performed in a method according to the invention, and
fig. 6 schematically shows a data carrier with computer program code for performing the steps of the method.

### DETAILED DESCRIPTION OF THE INVENTION

In the following, a detailed description of preferred embodiments of a method, an operator terminal and a computer program product for enabling an operator to make control related decisions in a process control system.

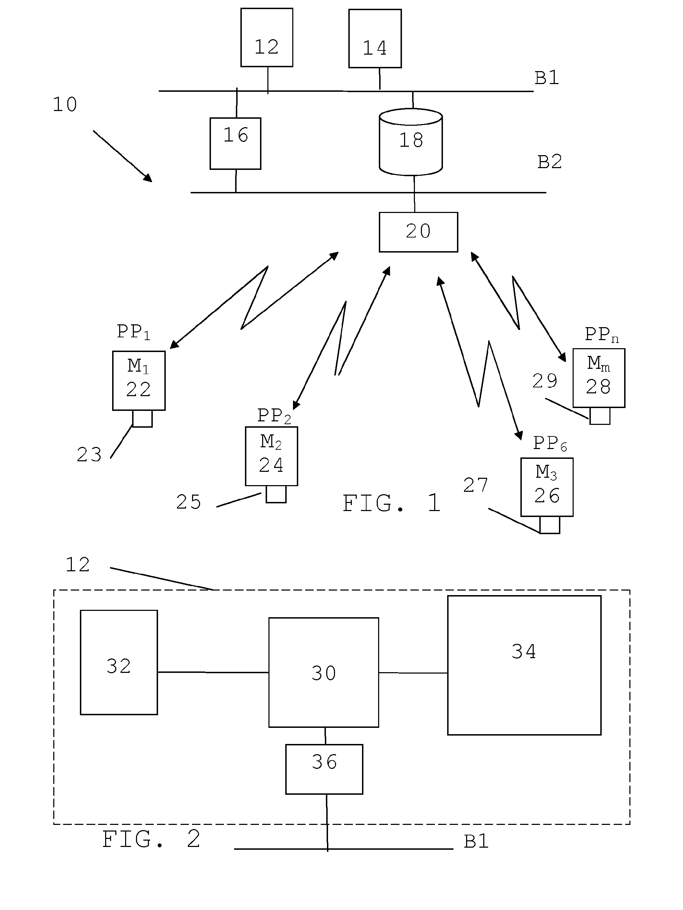

Fig. 1 schematically shows a computerized process control system 10 for controlling an industrial process. The process is with advantage a mining process, for instance the obtaining of minerals in a mine. However, the invention can also be applied in other industrial processes such as electrical power generation, transmission and distribution processes as well as water purification and distribution processes, oil and gas production and distribution processes, petrochemical, chemical, pharmaceutical and food processes, and pulp and paper production processes. These are just some examples of processes where the system can be applied. There exist countless other processes. The process may be monitored through one or more process monitoring computers, which communicate with a server handling monitoring and control of the process.

In fig. 1 the system 10 therefore includes a number of process monitoring computers 12 and 14. These computers may here also be considered to form operator terminals and are connected to a first data bus B1. There is furthermore a second data bus B2 and between the first and second data busses B1 and B2 there are connected a server 16 providing control and protection of the process and a database 18 where data relating to control and monitoring of the process is stored. Such data relating to control and protection may here comprises process control data such as measurements and control commands, while data relating to monitoring may comprise alarm and event data as well as data on which alarms and events can be generated, such as measurements made in the process. To the second data bus B2 there is furthermore connected a system interface, for instance in the form of a wireless gateway 20. In the industrial system there are furthermore a number of machines 22, 24, 26 and 28 involved in the process. These machines may be provided at different production points. The machines are furthermore provided with sensors for sensing properties of either the process or the machines themselves as well as with means for communicating with the system. A property of the process may for instance be the depth of drilling performed or the amount of rock loaded on a truck, while the property of a machine may be the status of an engine of a truck or a drill. The machines are furthermore typically involved in activities, which activities may be controlled through the server 16. Examples on activities in the field of mining is drilling, loading rock and blasting.

The sensors may be combined with means for communication and may therefore be wireless sensors communicating according to a suitable industrial wireless communication standard such Wireless Hart. The machines are furthermore with advantage mobile and thus able to move around between the different production points.

In fig. 1 there is shown a first exemplifying machine M₁ 22 with a first sensor 23 at a first production point PP₁, a second exemplifying machine M₂ 24 with a second sensor 25 at a second production point PP₂, a third exemplifying machine M₃ 26 with a third sensor 27 at a sixth production point PP₆ as well as an m^{th} machine 28 with an m^{th} sensor 29 at an n^{th} production point PPₙ. The use of different indicia for machines and production points have here been made in order to make clear that the numbers may differ from each other. There may be more machines than production points and vice versa. As can be understood from fig. 1 the first machine 22 may be moved to any of the other production points and it is also possible that at some point in time no machine is located at a certain production point. At other instances it is possible that more than one machine is located at a production point.

The sensor of a machine thus senses properties of the process and/or of the machine and reports these data to the server 16 via the wireless gateway 20, which server 16 then stores the data in the database 18.

The server 16 may here receive measurements of the process as well as status data concerning their operation from the machines and control the process based on these measurements. It can also generate alarm and event data that may be presented via the process monitoring computers 12 and 14 based on status data and measurements. It can also shut down the process. It furthermore also stores historical process control and alarm and event data in the data base 18.

It is furthermore possible that in the example of figure 1, a so called Network Manager system may run on the process control system 10, which belongs to the group of SCADA (Supervisory Control And Data Acquisition) systems.

The process monitoring computers 12 and 14 in the process control system 10 may each provide a user interface to the Network Manager system. In the following, the details of an exemplifying computer is explained based on the example of the process monitoring computer 12, shown in figure 2. The process monitoring computer 12 includes a user input unit 32, a display 34, a control unit 30 and an interface 36 for communicating with the system 10 via the first data bus **B1.** The process monitoring computer 12 provides a graphical user interface for an operator of the control system 10. The control unit 30 may be a processor with an associated program memory including program code for performing the functionality of the present invention, which will be described later on. The user input unit 32 is a unit through which a user of the operator terminal 12 may enter data. As such it may be a keyboard, a keypad or a mouse. It may also be combined with the display 34 in order to form a touch screen. The process monitoring computer 12 may also include other user interfaces such as a speaker or a microphone in order to present and receive data to and from one or more users of the process monitoring computer in other ways than through the display and keyboard. Such a user is in the following termed an operator. A process monitoring computer in a process control system is only one example of a computer in which the present invention may be realized. A process monitoring computer does not have to comprise a display and user input unit. It is also possible that the display and user input unit are provided as a separate entity in the form of a thin client or work station communicating with a process monitoring computer performing the functionality of the invention.

Process control data can be collected from the machines and other sensors and stored in the history data base 18 by the server 16 as well as presented in real-time to an operator via the display 34.

The server 16 may obtain a large amount of real time measurement data that is saved in the data base 18. The graphical user interface of process monitoring computers 12 or 14 supports the operator to control the system 10.

On the displays of process monitoring computer 12 and 14 there may be shown graphical symbols of parts of the the controlled process and machines.

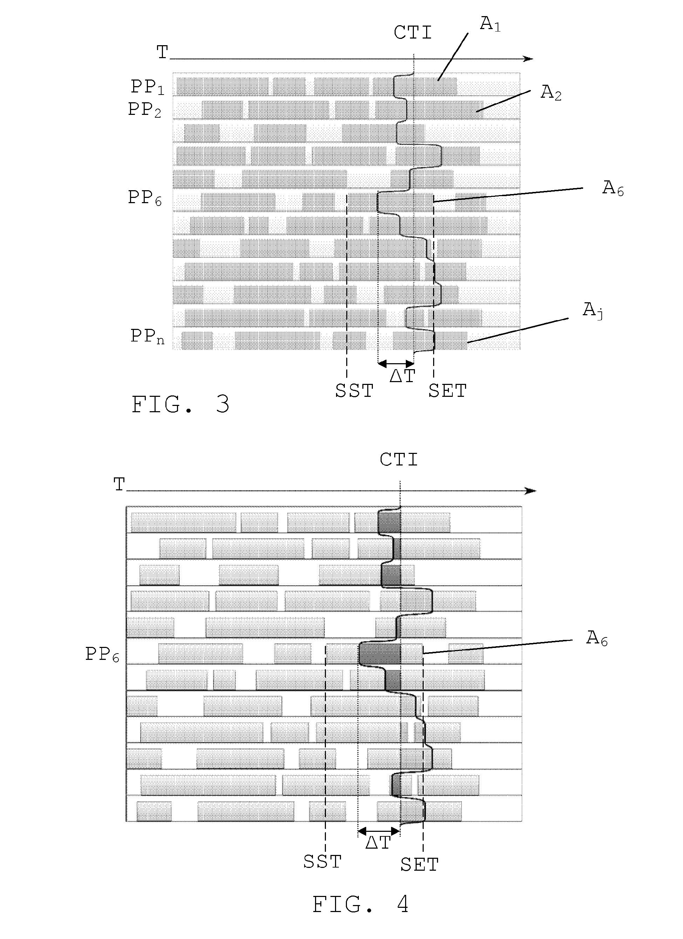

One view of what may be shown is depicted in fig. 3 and 4. Therefore the display of the process monitoring computer may show the progress of the various activities of the process. Such progress may for instance be displayed employing a Gantt chart, where fig. 3 and 4 shows such a Gantt chart.

The Gantt chart shows a number of rows, where each row is concerned with a production point or a machine. In the example given here each row is concerned with a certain production point. However, it is as alternative possible that a row is concerned with a machine instead.

On a row there is furthermore displayed a number of activities, which activities in this example are the consecutive activities to be performed at a production point. In the example of machines the activities would be the activities of a machine. The activities are furthermore the activities to be performed after each other in time. For this reason there is also a time line above the rows depicting the flow of time. Each activity is here depicted as a box where one side, the leftmost vertical side of the box corresponds to a starting time of the activity and the opposite, the rightmost vertical side, corresponds to the end time of the activity. The horizontal length of a box here represents the duration of the activity.

In fig. 3 and 4 there are thus shown a number of consecutive activities per row. There is here shown the activities of the first and second production points PP₁ and PP₂ followed by the activities of three further production points, a third, a fourth and a fifth production point. Then follows the activities of the sixth production point PP₆, followed by a number of further production points and then finally the activities of the n^{th} production point PPₙ.

The activities shown are the activities that have been scheduled for the different production points, i.e. the ones that have been planned in advance. However, in the scheme there is also shown a current time indicator CTI depicting a current point in time and the positions where this current time indicator (CTI) intersects the activities of the rows, are the positions that the activities should have reached according to schedule.

There is in fig. 3 indicated a first activity A₁, which is an activity at the current point in time being performed at the first production point PP₁, in this example the first machine 22, a second activity A₂, which is an activity being scheduled and performed at the current point in time at the second production point PP₂. This second activity A₂ is in this example performed by the second machine 24. There is also a sixth activity A₆, which is the activity being performed at the sixth production point PP₆ and the current point in time, which sixth activity A₆ is here performed by the third machine 26. Finally a j^{th} activity Aⱼ is indicated, which activity Aⱼ is performed at the n^{th} production point PPₙ at the current point in time. This activity Aⱼ is here performed by the m^{th} machine 28. The indicia j is here used instead of n as an indicia indicating the number of activities in order to clarify that the number of activities can differ from the number of production points.

In fig. 3 the starting time and end time of the sixth activity A₆ are indicated, which are scheduled starting time SST and scheduled end time SET, since these times are the starting and end times according to schedule. In fig. 3 there is furthermore shown a line that meanders around the current point in time. The area between this meandering line and the current time indicator CTI with respect to the sixth activity A₆ is indicated as a time displacement ΔT from the current time indicator CTI. The functioning of this meandering line and the time displacement ΔT will be described shortly.

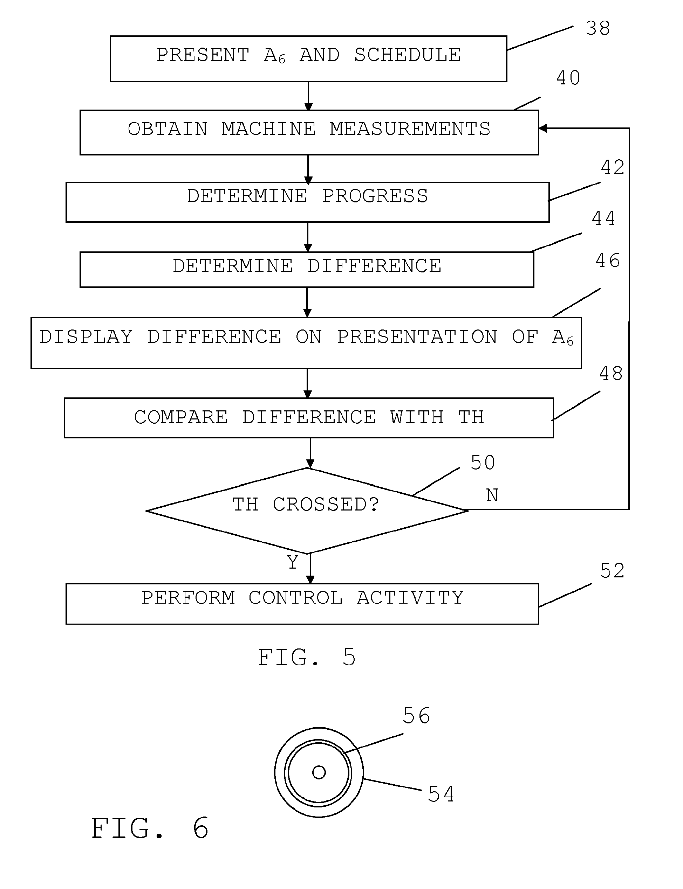

The functioning of a first embodiment of the invention will now be described with reference being made to fig. 1 - 3, as well as to fig. 5, which shows a flow chart of a number of method steps being performed by the process monitoring computer.

Gantt charts are commonly used when planning activities in industrial processes such as mining processes. The functionality of Gantt charts can be extended to show the progress of each activity for instance by shading a portion of the box corresponding to the progress of the individual activity.

Operators for underground mines use Gantt schedules like these when planning and maintaining the schedules for workers, machines and production points. Progress updates for activities have so far been handled manually by the operator after receiving progress reports from workers down in the mine.

In the system of the invention it is instead proposed that automatic progress updates are obtained using live sensor data, measuring the activities. Based on the measurements the current status of the activities are then determined and presented.

The method of the invention will in the following be described in relation to the sixth activity A₆ being performed by the third machine 26 at the sixth production point PP₆. It should however be realized that the method steps are normally performed on all activities that are carried out at the current point in time at some or all of the production points. Furthermore before the method is started the activities to be performed have been scheduled, which scheduling may have been made by the operator. The activities are here at least partly performed by the machines at the production points. In the scheduling each activity receives a scheduled start time SST and a scheduled end time SET.

The method starts with the control unit 30 presenting the sixth activity A₆ according to schedule on the display 34, step 38, where the activity A₆ is presented with the scheduled start time SST and the scheduled end time SET. The point that the scheduled activity should have reached at the current point in time is here indicated using the current time indicator CTI. The scheduled data comprising the scheduled start time SST and scheduled end time SET of all activities may be stored locally in the process monitoring computer 12. As an alternative it may be stored in the data base 18.

Thereafter the control unit 30 of the process control computer 12 obtains, measurements made by the third machine 26, step 40, i.e. measurements made using the sensor 27 of the third machine 26. These measurements may be previously stored in the database 18 by the server 16 and therefore the control unit 12 may obtain these measurements through fetching them from the database 18. The measurements may also be time stamped so that the time of the measurements may be obtained at the same time. As an alternative, the process monitoring computer 12 may fetch the data directly from the third machine 26 via the wireless gateway 20. The measurements may as was described earlier be measurements of the progress of the activity A₆ as such, such as how deep a drill has been drilling. However the measurements may also be measurements concerning the machine 26, such as concerning the operation of components in the machine such as how fast a motor is running.

After this data has been obtained, the progress of the activity is determined based on the machine measurements, step 42. The progress may be determined by the control unit 30. As an alternative it is possible that the progress is determined by the server 16, in which case the control unit will fetch progress data from either the server 16 or from the database 18, if being stored there. The progress of a drilling of a hole may as an example be determined through considering the speed of rotation of a drill, the starting point, possibly the depth of the hole at the current point in time and the desired depth of the hole.

Thereafter the control unit 30 determines the difference between the progress and the schedule. This is done through determining the difference between the progress and the point that should have been reached according to schedule, step 44. Thereafter the control unit 30 displays the difference on the presentation of the scheduled activity, step 46. The control unit 30 may then present the difference for the activities with regard to all production points and the sum of all these differences is here presented using the above mentioned meandering progress line. In relation to the sixth activity A₆ the difference between the schedule and the progress is displayed as the time displacement ΔT from the current time indicator. If the progress is behind schedule then the difference is displayed as a time displacement in a negative direction from the current time indicator, i.e. backwards in time, while if the progress is ahead of schedule it is displayed as a time displacement in a positive direction from the current time indicator, i.e. forward in time. In the example the sixth activity A₆ in fig. 3, the time displacement is displayed as a negative displacement. Also positive time displacements can be seen in fig. 3. The individual time displacements of all the activities are then connected from row to row and in this way the meandering line is obtained, which is a progress line.

It is in this way possible to get a good overview of the progress of the various activities without the view being cluttered with additional objects, thereby avoiding confusion on behalf of the operator. Furthermore, since no additional elements are being used, the display is economical and therefore energy is also saved. The operator may thus now easily assess the overall progress simply by comparing the vertical current time indicator with the meandering progress line. If the progress line shifts to the left of the current time indicator CTI, an activity is delayed, and equivalently, a shift to the right means that an activity is ahead of schedule.

Unlike the traditional way of visualizing progress in Gantt charts, the meandering progress line does not introduce any significant visual clutter. Thanks to the power of human vision this solution also scales extremely well and facilitates a deeper exploration of underlying trends of progress. This type of presentation also reduces cognitive strain when working with large Gantt charts, leading to increased productivity.

In the first embodiment of the invention, the control unit 30 also compares the time displacement of the activity A₆ with at least one control activity threshold TH, step 48, and if this threshold is crossed, step 50, then a control activity is performed, step 52.

The control activity threshold TH may here comprise an operations threshold and the control activity may comprise rescheduling of an activity in the process and a sending of a reschedule instruction to at least one machine involved in the rescheduled activity.

If for instance the time displacement of an activity at a production point is such that another activity would be delayed so that it cannot be performed within a certain time, then a rescheduling may be performed in relation at least to the production point of the other delayed activity. The other delayed activity may be a later activity, such as a following activity, at the same production point. It may also be an activity at another production point. It is for instance possible that a blasting is planned to be made at the same point of time at one or more production points and that at this point in time when the blasting is to take place, no activity is allowed or only some activities are allowed at some or all production points. If then an activity that is not allowed would extend to this point in time of the blast, then at least this activity may be rescheduled.

As an alternative it is possible that the at least one control activity threshold TH comprises an alarm threshold and the control activity comprises generating an alarm.

As yet another alternative it is possible that both comparisons are being made with both these thresholds. A re-scheduling may then be attempted first and if this is not possible, an alarm may be generated.

It is possible to further clarify the presentation of the time displacement in order to enable better operator decisions to be made. This is exemplified in fig. 4. The only difference between fig. 3 and 4 is in the way the time displacement is presented. According to this variation of the invention the direction of the time displacement is coded into the presentation of the progress. The coding may furthermore be performed using a colour. It is for instance possible that a negative time displacement has one colour, for instance red, and the positive time displacement another colour, for instance blue, in order to clearly show the relationship between progress and schedule. It is here possible that the indication of the point in time reached according to schedule has another colour, for instance grey.

It can here also be mentioned that other types of coding may be used, such as shading, hatching and cross-hatching of the activities.

The process monitoring computer may, as was previously described, preferably be provided in the form of one or more processors together with computer program memory including computer program code for performing the present invention. This computer program code may also be provided on one or more data carriers which performs the functionality of the present invention when the program code thereon is being loaded in process monitoring computer. One such data carrier 54 with computer program code 56, in the for of a CD ROM disc, is schematically shown in fig. 6.

There are many variations of the invention that are possible apart from those already mentioned. It is for instance possible that the performing of control activities after comparison with a control activity thresholds is omitted. Therefore the invention is only to be limited by the following claims.

## Claims

1. A method of monitoring the progress of a scheduled activity (A₆) in an industrial process, the activity being performed at least partly via a machine (26) and presented for an operator on a display (34) of a process monitoring computer (12), the method comprising the steps of:
- presenting (38) the activity (A₆) according to schedule,
- obtaining (40) measurements made by the machine,
- determining (42) the progress of the activity based on the machine measurements,
- determining (44) the difference between progress and schedule, and
- displaying (46) the difference on the presentation of the scheduled activity.

2. Method according to claim 1, wherein a current point in time according to schedule is presented using a current time indicator (CTI) and the difference between progress and schedule is displayed as a time displacement (ΔT) from the current time indicator.

3. Method according to claim 2, wherein a progress being behind schedule is displayed as a time displacement in a negative direction from the current time indicator.

4. Method according to claim 2 or 3, wherein a progress being ahead of schedule is displayed as a time displacement in a positive direction from the current time indicator.

5. Method according to any of claims 2 - 4, wherein the direction of the time displacement is coded into the presentation of the progress.

6. Method according to claim 5, wherein the coding is a colour coding.

7. Method according to any of claims 2 - 6, further comprising comparing (48) the time displacement with at least one control activity threshold (TH) and performing (52) a control activity if the threshold is crossed.

8. Method according to claim 7, wherein the at least one control activity threshold comprises an operations threshold and the control activity comprises rescheduling an activity in the process and sending a reschedule instruction to at least one machine involved in the rescheduled activity.

9. Method according to claim 7 or 8, wherein the at least one control activity threshold comprises an alarm threshold and the control activity comprises generating an alarm.

10. Method according to any previous claim, wherein the activity and the progress are presented in a Gantt chart.

11. Method according to any previous claim, wherein the process is a mining process.

12. A process monitoring computer for monitoring the progress of a scheduled activity (A₆) in an industrial process, the activity being performed at least partly via a machine (26) and presented for an operator via the process monitoring computer (12), the process monitoring computer comprising a control unit configured to
- present the activity (A₆) according to schedule,
- obtain measurements made by the machine,
- determine the progress of the activity based on the machine measurements,
- determine the difference between the progress and the schedule, and
- display the difference on the presentation of the scheduled activity.

13. The process monitoring computer according to claim 12, wherein the control unit is configured to present a current point in time according to schedule using a current time indicator (CTI) and is further configured to present the difference between the progress and schedule as a time displacement (ΔT) from the current time indicator.

14. The process monitoring computer according to claim 13, wherein a progress being behind schedule is displayed as a time displacement in a negative direction from the current time indicator.

15. The process monitoring computer according to claim 13 or 14, wherein a progress being ahead of schedule is displayed as a time displacement in a positive direction from the current time indicator.

16. The process monitoring computer according to any of claims 13 - 15, wherein the direction of the time displacement is coded into the presentation of the progress

17. The process monitoring computer according to claim 16, wherein the coding is a colour coding.

18. The process monitoring computer according to any of claims 13 - 17, wherein the control unit is further configured to compare the time displacement with at least one control activity threshold (TH) and perform a control activity if the threshold is crossed.

19. The process monitoring computer according to claim 18, wherein the at least one control activity threshold comprises an operations threshold and the control unit when performing a control activity is configured to reschedule an activity in the process and send a reschedule instruction to at least one machine involved in the rescheduled activity.

20. The process monitoring computer according to claim 18 or 19, wherein the at least one control activity threshold comprises an alarm threshold and the control unit when performing a control activity is configured to generate an alarm.

21. Computer program product for monitoring the progress of a scheduled activity (A₆) in an industrial process, the activity being performed at least partly via a machine (26) and presented for an operator via a process monitoring computer (12), said computer program product being provided on a data carrier (54) comprising computer program code (56) configured to cause the process monitoring computer (12) to, when said computer program code is loaded into the process monitoring computer (12),
- present the activity (A₆) according to schedule,
- obtain measurements made by the machine,
- determine the progress of the activity based on the machine measurements,
- determine the difference between the progress and the schedule, and
- display the difference on the presentation of the scheduled activity on the display.
